# EUROPÄISCHE PATENTSCHRIFT

(11) **EP 1 876 369 B1**
(45) Veröffentlichungstag und Bekanntmachung des Hinweises auf die Patenterteilung: **02.10.2013**
(21) Anmeldenummer: 07012137.1
(22) Anmeldetag: 21.06.2007
(51) Int. Cl.: F16D 13/64

(54) **Reibscheibe für eine nasslaufende Kupplung für ein Fahrzeug**
Friction disc for the wet coupling of a vehicle
Disques de frottement pour un couplage en milieu humide pour un véhicule

(30) Priorität: 05.07.2006 DE 102006031035
(43) Veröffentlichungstag der Anmeldung: 09.01.2008
(73) Patentinhaber: ZF Friedrichshafen AG, 88038 Friedrichshafen (DE)
(72) Erfinder: Sudau, Jörg, 97464 Niederwerrn (DE); Lotze, Rüdiger, 97424 Schweinfurt (DE); Schröder, Arthur, 97456 Hambach (DE); Sueck, Gregor, 97526 Sennfeld (DE)

(56) Entgegenhaltungen:
- EP-A1- 0 521 843
- EP-A1- 0 625 647
- EP-A1- 0 874 180
- EP-A1- 1 152 160
- EP-A1- 1 473 478
- EP-A1- 1 731 784
- EP-A2- 0 969 219
- EP-A2- 1 548 312
- WO-A1-02/10605
- WO-A1-02/070913
- DE-A1- 2 422 626
- DE-A1-102005 030 192
- US-A- 3 249 189
- US-A- 3 586 134
- US-A- 5 094 331
- US-A- 5 921 366
- US-A1- 2005 109 576
- US-A1- 2007 000 747
- US-B1- 6 293 382
- US-B1- 6 454 072

## Beschreibung

Die vorliegende Erfindung betrifft eine Reibscheibe für eine nasslaufende Kupplung für ein Fahrzeug, umfassend einen Belagträgerring mit Ankopplungsbereichen zur Ankopplung der Reibscheibe an eine Antriebsseite oder eine Abtriebsseite einer Kupplung sowie an wenigstens einer Seite des Belagträgerrings eine Mehrzahl von an diesem getragenen Reibbelagselementen, wobei zwischen in Umfangsrichtung unmittelbar benachbarten Reibbelagselementen Fluidströmungskanäle vorgesehen sind und wobei wenigstens eines der Reibbelagselemente mit einer zu einer Reibfläche desselben offenen Nutanordnung ausgebildet ist, die wenigstens einen Nutabschnitt aufweist, der in einem Teilerstreckungsbereich sich im Wesentlichen in Umfangsrichtung und in einem weiteren Teilerstreckungsbereich sich im Wesentlichen in radialer Richtung erstreckt.

Eine solche Reibscheibe ist aus der DE 24 22 626 A bekannt. Die einzelnen Reibbelagselemente sind jeweils zwischen zwei Fluidströmungskanälen angeordnet, und verfügen jeweils über eine Nutanordnung, bei welcher eine erste Gruppe von Nutabschnitten sich im Wesentlichen in Umfangsrichtung erstrecken und beidseits mit Nutenden versehen sind, die zum jeweiligen Umfangsende des Reibbelagselements offen sind, und eine zweite Gruppe von Nutabschnitten sich im Wesentlichen in radialer Richtung erstrecken und beidseits mit Nutenden versehen sind, die zum jeweiligen radialen Ende des Reibbelagselements offen sind,. Die beiden Gruppen von Nutabschnitten sind im Wesentlichen senkrecht zueinander angeordnet und begrenzen aufgrund dieser Anordnung Reibbelagsflächen, die aufgrund der Anordnung der beiden Gruppen von Nutabschnitten als Rechtecke, bevorzugt sogar als Quadrate, ausgeformt sind. Bei hinreichender Anzahl an ersten Gruppen und an zweiten Gruppen der Nutabschnitte ergeben sich waffelmusterartige Reibbelagsflächen, die zwar eine großflächige Kühlung des Reibbereichs ermöglichen mögen, dafür aber eine starke Reduzierung der nutzbaren Reibbelagsfläche verursachen. Dies wirkt sich nachteilig auf die Höhe der übertragbaren Drehmomente aus.

Reibscheiben mit Reibbelagssegmenten, die über waffelmusterartige Reibbelagsflächen verfügen, sind weiterhin aus der US 3,586,134 A und aus der EP 0 521 843 A1 bekannt.

Aus der DE 101 25 628 A1 ist eine nasslaufende Reibungskupplung für ein Fahrzeug bekannt, bei welcher mit der Eingangsseite und der Ausgangsseite der Reibungskupplung jeweils mehrere Reibscheiben bzw. Lamellen gekoppelt sind und durch Gegeneinanderpressen dieser Reibscheiben ein Drehmoment zwischen der Antriebsseite und der Abtriebsseite übertragen werden kann. Zumindest an einigen dieser Reibscheiben ist durch verschiedene Maßnahmen dafür gesorgt, dass das in einer derartigen nasslaufenden Kupplung vorhandene Fluid, im Allgemeinen Öl, in einem Kreislauf im Bereich der reibend miteinander in Wechselwirkung tretenden Reibflächen umgewälzt wird, um für eine verstärkte Wärmeabfuhr zu sorgen. Hierzu sind an den bzw. einigen der Reibscheiben Fluidförderflächen vorgesehen, die nach Art von Turbinenschaufeln für eine Fluidumwälzung sorgen. Diese Fluidförderflächen können an einem Reibbelagträger gebildet sein, können jedoch auch durch in Umfangsrichtung orientierte Flächen der Reibbeläge selbst erzeugt werden. Es entstehen somit beispielsweise von radial innen nach radial außen über die gesamten Reibscheiben sich hinwegerstreckende Strömungskanäle für das umzuwälzende Fluid, wobei ein sehr gleichmäßiges Muster sich abwechselnder Strömungskanäle und reibend wirksam werdender Oberflächenbereiche geschaffen ist. Durch dieses gleichmäßige Muster entsteht jedoch im Rotationsbetrieb die Gefahr, dass bedingt durch die Periodizität dieses Musters Schwingungen angeregt werden, die sich auf das Kupplungsverhalten nachteilhaft auswirken und ggf. sogar im Antriebsstrang spürbar werden. Auch besteht ein Problem dahingehend, dass durch diese Fluidströmungskanäle zwar aus den unmittelbar an diese Kanäle angrenzenden Bereichen der Reibbeläge Wärme abgeführt werden kann, nicht jedoch aus Bereichen, die von diesen Fluidströmungskanälen weiter entfernt liegen und nicht unmittelbar umströmt werden. Ferner bilden die die Strömungskanäle in Umfangsrichtung begrenzenden und im Wesentlichen radial gerichteten Kanten für das umzuwälzende Fluid Strömungshindernisse, insbesondere im ausgerückten bzw. teilweise ausgerückten Zustand einer derartigen Kupplung, welche wiederum zu Schleppmomenten und somit einer ungewünschten Kraftkopplungswechselwirkung zwischen unmittelbar benachbarten Reibscheiben führen können.

Aus der US 6,454,072 B1 ist eine Reibscheibe für eine nasslaufende Kupplung bekannt, bei welcher in jeweiligen Reibbelagsringen von radial innen nach radial außen sich erstreckende Nuten vorgesehen sind, um eine Durchströmung mit Fluid zu erreichen.

Eine weitere Reibscheibe ist aus der US 3,249,189 A bekannt. An der Reibscheibe sind in Umfangsrichtung aufeinander folgend an einem Belagträgerring mehrere Reibbelagselemente mit gegenseitigem Umfangsabstand vorgesehen. Die Reibbelagselemente sind mit einer zu einer Reibfläche derselben offenen Nutanordnung ausgebildet, die eine Mehrzahl von gruppenweise parallel zueinander und geradlinig sich erstreckenden Kanälen bzw. Nutabschnitten umfassen. Die Kanäle bzw. Nutabschnitte unterschiedlicher Gruppen sind zueinander nicht parallel angeordnet und schneiden sich gegenseitig, so dass in den von den Kanälen bzw. Nutabschnitten umgrenzten Bereichen dreieckige Reibflächenabschnitte gebildet sind.

Die US 6,454,072 B1 offenbart einen ringförmigen Reibbelag mit von einem radial inneren zu einem radial äußeren Endbereich desselben sich erstreckenden und zu einer Reibfläche offenen Nuten. Diese Nuten sind kreissegmentartig ausgebildet, so dass ihr radial innerer und ihr radial äußerer Endbereich in Umfangsrichtung zueinander versetzt liegen und die einzelnen Nutabschnitte sich gegenseitig durchkreuzen.

Die US 5,094,331 offenbart eine Reibscheibe mit an beiden Seiten derselben vorgesehenen Reibbelägen. Diese weisen von radial innen nach radial außen sich erstreckende und zu einer Reibseite offene Nuten auf.

Die WO 02/10605 A1 offenbart eine Reibscheibe mit an einem Reibbelagträger getragenen Reibbelagselementen. Diese sind mit einer Nutanordnung versehen, welche eine Mehrzahl von sich im Wesentlichen parallel und im Wesentlichen kreisförmig gekrümmter Nutabschnitte umfasst.

Es ist die Aufgabe der vorliegenden Erfindung, eine Reibscheibe für eine nasslaufende Kupplung für ein Fahrzeug vorzusehen, welche bei guten Kühlungseigenschaften eine hohe Übertragungsfähigkeit für Drehmomente ermöglicht.

Die eingangs genannte Aufgabe wird gelöst durch eine Reibscheibe für eine nasslaufende Kupplung für ein Fahrzeug, umfassend einen Belagträgerring mit Ankopplungsbereichen zur Ankopplung der Reibscheibe an eine Antriebsseite oder eine Abtriebsseite einer Kupplung, sowie an wenigstens einer Seite des Belagträgerrings eine Mehrzahl von an diesem getragenen Reibbelagselementen, wobei zwischen in Umfangsrichtung unmittelbar benachbarten Reibbelagselementen Fluidströmungskanäle vorgesehen sind und wobei wenigstens eines der Reibbelagselemente mit einer zu einer Reibfläche desselben offenen Nutanordnung ausgebildet ist, die wenigstens einen Nutabschnitt aufweist, der in einem Teilerstreckungsbereich sich im Wesentlichen in Umfangsrichtung und in einem weiteren Teilerstreckungsbereich sich im Wesentlichen in radialer Richtung erstreckt, und wobei die Nutanordnung eine erste Gruppe von Nutabschnitten und eine zweite Gruppe von Nutabschnitten umfasst, dadurch gekennzeichnet, dass die Nutabschnitte der ersten Gruppe in einem ersten Nutende zu einem Umfangsende des wenigstens einen Reibbelagselements und in einem zweiten Nutende zu einem radial äußeren Ende des wenigstens einen Reibbelagselements offen sind und die Nutabschnitte der zweiten Gruppe an einem im Wesentlichen diametral gegenüber liegenden Ende des Reibbelagselements angeordnet sind und in einem ersten Nutende zum anderen Umfangsende des wenigstens einen Reibbelagselements offen sind und in einem zweiten Nutende zu einem radial inneren Ende des wenigstens einen Reibbelagselements offen sind, wobei außer an den Nutenden diese Nutabschnitte geschlossen sind und der im Wesentlichen in Umfangsrichtung sich erstreckende Teilerstreckungsbereich des wenigstens einen Nutabschnitts und der im Wesentlichen in radialer Richtung sich erstreckende Teilerstreckungsbereich des wenigstens einen Nutabschnitts in einem Knickbereich oder Krümmungsbereich ineinander übergehen.

Bei dieser Ausgestaltung mit einem Nutmuster in zumindest einem der Reibbelagselemente kann es hinsichtlich des Vermeidens von Schwingungsanregungen besonders vorteilhaft sein, wenn die Fluidströmungskanäle zumindest zum Teil zueinander unterschiedliche Kanalbreiten aufweisen. Durch die Segmentierung eines Reibbelags, also das Bereitstellen mehrerer in Umfangsrichtung aufeinander folgender Reibbe-lagselemente werden zwischen diesen Reibbelagselementen auch bei im Wesentlichen planar ausgebildetem Belagträgerring Fluidströmungskanäle generiert, in welchen Fluid von radial innen nach radial außen bzw. in entgegengesetzter Richtung strömen kann. Die in Umfangsrichtung gerichteten Oberflächen der einzelnen Reibbelagselemente können als Fluidförderflächen wirksam sein. Da bei dem erfindungsgemäßen Aufbau jedoch kein gleichmäßig sich abwechselndes Muster von Reibbelagselementen und Fluidströmungskanälen vorgesehen ist, sondern die Breite der Fluidströmungskanäle variiert, ist die Gefahr der Schwingungsanregung im Rotationsbetrieb deutlich gemindert. Es sei hier darauf hingewiesen, dass eine variierende Breite der Fluidströmungskanäle bezüglich einander den Vergleich verschiedener Kanäle beispielsweise am gleichen Radialbereich anspricht. Dass einzelne Fluidströmungskanäle dann von radial innen nach radial außen zusätzlich noch eine sich ändernde Kanalbreite aufweisen können, sei dabei nicht ausgeschlossen.

Es kann vorgesehen sein, dass die Nutanordnung wenigstens einen Nutabschnitt aufweist, der an einem ersten Nutende zu einem der Umfangsenden des wenigstens einen Reibbelagselements offen ist und an einem zweiten Nutende zum radial inneren Ende oder zum radial äußeren Ende des wenigstens einen Reibbelagselements offen ist.

Um die durch eine Nutanordnung bzw. ein Nutmuster generierten Vorteile im Wesentlichen über die gesamte Betriebslebensdauer einer derartigen Reibscheibe ausnutzen zu können, wird vorgeschlagen, dass die Nutanordnung wenigstens bereichsweise eine der Dicke des wenigstens einen Reibbelagselements entsprechende Nuttiefe aufweist.

Die vorliegende Erfindung wird nachfolgend mit Bezug auf die beiliegenden Figuren detailliert beschrieben. Es zeigt:
- Fig. 1: eine Teil-Axialansicht einer Reibscheibe für eine nasslaufende Reibungskupplung;
- Fig. 2: eine der Fig. 1 entsprechende Darstellung der erfindungsgemäßen Ausgestaltungsform einer Reibscheibe.

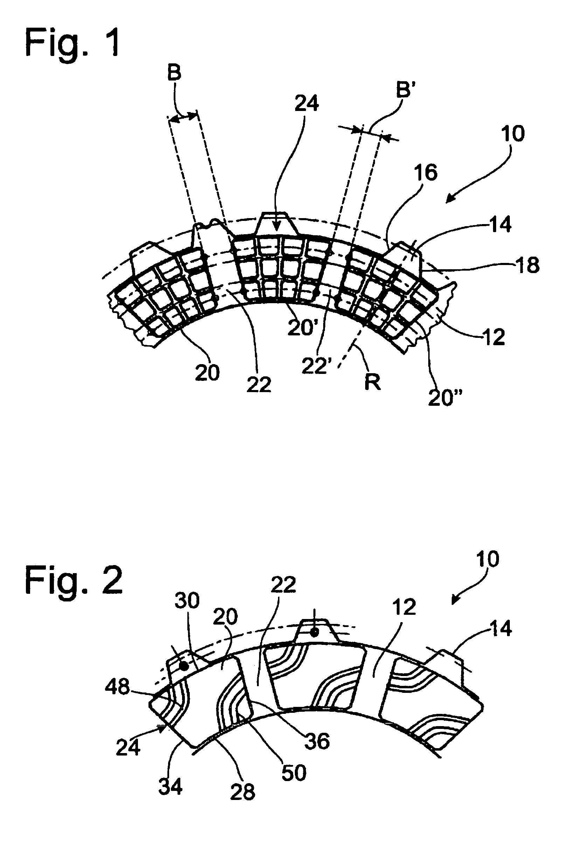

In Fig. 1 ist eine Reibscheibe 10 für eine nasslaufende Reibungskupplung für einen Antriebsstrang eines Fahrzeugs in axialer Ansicht und nur zum Teil dargestellt. Die Reibscheibe 10 umfasst einen Belagträgerring 12, der beispielsweise aus Stahl- oder Blechmaterial hergestellt sein kann und im dargestellten Beispiel an seinem äußeren Umfangsbereich eine Mehrzahl von vorsprungartigen Ankopplungsbereichen 14 aufweist. Mit diesen kann die Reibscheibe 10 in Mitnahmeeingriff mit entsprechenden Organen einer Reibungskupplung gebracht werden, um ein Drehmoment übertragen zu können, gleichwohl aber eine axiale Bewegbarkeit eines derartigen Reibrings zur Durchführung von Ein- und Auskuppelvorgängen sicherstellen zu können. Man erkennt dabei in Fig. 1, dass diese Ankopplungsbereiche 14 in Umfangsrichtung orientierte Flanken 16, 18 aufweisen, die bezüglich einer Radiallinie R verschieden geneigt sein können, um hier für den Zugbetrieb und den Schubbetrieb unterschiedliche Abstützwechselwirkungen erzielen zu können.

Dieser allgemeine Aufbau des Belagträgerrings, wie er vorangehend beschrieben und in Fig. 1 erkennbar ist, kann für die folgende noch beschrieben Ausführungsform einer Reibscheibe 10 selbstverständlich gleichermaßen realisiert sein.

Man erkennt in Fig. 1 weiter, dass die Reibscheibe 10 an der erkennbaren Seite des Belagträgerrings 12 eine Mehrzahl von in Umfangsrichtung aufeinander folgenden Reibbelagselementen 20, 20' und 20" umfasst. Diese zueinander grundsätzlich identisch aufgebauten Reibbelagselemente 20, 20' und 20" sind mit Umfangsabstand zueinander am Belagträgerring 12 beispielsweise durch Verklebung oder Vernietung festgelegt, so dass zwischen in Umfangsrichtung unmittelbar aufeinander folgenden der Reibbelagselemente 20, 20', 20" Fluidströmungskanäle 22, 22' usw. gebildet sind. Durch die vorgegebene Positionierung der Reibbelagselemente 20, 20', 20" am Belagträgerring 12 werden unterschiedliche Umfangsabstände und entsprechend verschiedene Kanalbreiten B, B' usw. erhalten. Dabei können, wie in Fig. 1 erkennbar, die Fluidströmungskanäle 22, 22' in radialer Richtung eine näherungsweise konstante Breite B bzw. B' aufweisen, können aber auch in radialer Richtung eine variierende Breite aufweisen. Das Bereitstellen verschiedener Breiten B, B' der Fluidströmungskanäle 22, 22' bezüglich einander, wobei diese Breiten beispielsweise gemessen werden können an einem vorgegebenen Radius, führt dazu, dass im Rotationsbetrieb eine Schwingungsanregung, wie sie durch eine gleichmäßige Beabstandung der einzelnen Reibbelagselemente 20, 20', 20" erzeugt wird, vermieden wird. Dazu können beispielsweise alle zwischen den Reibbelagselementen einer Reibscheibe 10 gebildeten Fluidströmungskanäle verschiedene Kanalbreiten aufweisen, oder es können beispielsweise zwei Kanalbreiten vorgegeben sein, die in einem unregelmäßigen Muster wechseln.

Die Fluidströmungskanäle 22, 22' haben die wesentliche Aufgabe, einen relativ großen Volumenstrom in radialer Richtung zu ermöglichen. Im Rotationsbetrieb wird dieser Volumenstrom erzeugt bzw. unterstützt durch die an den Umfangsenden der einzelnen Reibbelagselemente 20, 20', 20" vorhandenen und im Wesentlichen in Umfangsrichtung orientierten Oberflächen der Reibbelagselemente 20, 20', 20". Auf diese Art und Weise kann eine Fluidumwälzung im Bereich der reibend miteinander in Wechselwirkung tretenden Reibscheiben erzeugt werden, die eine verstärkte Wärmeabfuhr mit sich bringt. Dabei werden vor allem die den Fluidströmungskanälen 22, 22' nahe liegenden Bereiche der Reibbelagselemente 20, 20', 20" gekühlt. Weiter in Umfangsrichtung entfernt liegenden Bereiche partizipieren an einer derartigen Kühlungswirkung jedoch nicht bzw. nur mit deutlich geringerem Anteil. Um auch in weiter von den Fluidströmungskanälen 22, 22' liegenden Bereichen der Reibbelagselemente 20, 20', 20" eine verstärkte Kühlung erzielen zu können, weisen die Reibbelagselemente 20, 20', 20" eine allgemein mit 24 bezeichnete Nutanordnung auf. Diese Nutanordnung 24 ist zur jeweiligen Reiboberfläche, also der in Fig. 1 erkennbaren Oberfläche, der Reibbelagselemente 20, 20', 20" offen und ist von dem in einer nasslaufenden Reibungskupplung vorhandenen Fluid durchströmbar.

Im Folgenden wird eine erfindungsgemäße Ausgestaltungsform einer Reibscheibe beschrieben, wobei diese sich vor allem in der Ausgestaltung der eingesetzten Reibbelagselemente unterscheidet. Es wird daher auch lediglich auf diesen Unterschied eingegangen und darauf hingewiesen, dass vor allem hinsichtlich der Ausgestaltung des Belagträgerrings 12 und der Breitenvariation der Fluidströmungskanäle 22, 22' usw. die im Folgenden beschriebene Reibscheibe so aufgebaut sein kann, wie vorangehend mit Bezug auf die Fig. 1 dargelegt.

In Fig. 2 ist eine Ausgestaltungsform gezeigt, bei welcher Nutabschnitte 48 einer ersten Gruppe von Nutabschnitten an einem ersten Nutende zum Umfangsende 34 offen sind und an einem zweiten Nutende zum radial äußeren Ende 30 offen sind. Nutabschnitte 50 einer zweiten Gruppe von Nuten liegen im Wesentlichen am diametral gegenüber liegenden Ende des Reibbelagselements 20 und sind in einem ersten Nutende zum Umfangsende 36 offen und in einem zweiten Nutende zum radial inneren Ende 50 offen. Diese Nutabschnitte 48, 50 sind also grundsätzlich derart vorgesehen, dass sie ausgehend von einem jeweiligen Umfangsende einen näherungsweise bzw. primär in Umfangsrichtung sich erstreckenden Bereich aufweisen und dann nach einem Knick in einen näherungsweise bzw. primär sich radial erstreckenden Bereich übergehen. Außer an den Nutenden sind diese Nutabschnitte geschlossen. Auch hier wird eine sehr gute Durchströmung gewährleistet, wobei auf Grund des Vorsehens des Knickbereichs bzw. Krümmungsbereichs wieder der vorangehend angesprochene Drosseleffekt mit Druckerhöhung erzeugt werden kann.

## Patentansprüche

1. Reibscheibe für eine nasslaufende Kupplung für ein Fahrzeug, umfassend einen Belagträgerring (12) mit Ankopplungsbereichen (14) zur Ankopplung der Reibscheibe (10) an eine Antriebsseite oder eine Abtriebsseite einer Kupplung, sowie an wenigstens einer Seite des Belagträgerrings (12) eine Mehrzahl von an diesem getragenen Reibbelagselementen (20, 20', 20"), wobei zwischen in Umfangsrichtung unmittelbar benachbarten Reibbelagselementen (20, 20', 20") Fluidströmungskanäle (22, 22') vorgesehen sind und wobei wenigstens eines der Reibbelagselemente (20 20', 20") mit einer zu einer Reibfläche desselben offenen Nutanordnung (24) ausgebildet ist, die wenigstens einen Nutabschnitt (48, 50) aufweist, der in einem Teilerstreckungsbereich sich im Wesentlichen in Umfangsrichtung und in einem weiteren Teilerstreckungsbereich sich im Wesentlichen in radialer Richtung erstreckt, und wobei die Nutanordnung (24) eine erste Gruppe von Nutabschnitten (48) und eine zweite Gruppe von Nutabschnitten (50) umfasst, **dadurch gekennzeichnet, dass** die Nutabschnitte (48) der ersten Gruppe in einem ersten Nutende zu einem Umfangsende (34) des wenigstens einen Reibbelagselements (20) und in einem zweiten Nutende zu einem radial äußeren Ende (30) des wenigstens einen Reibbelagselements (20) offen sind und die Nutabschnitte (50) der zweiten Gruppe an einem im Wesentlichen diametral gegenüber liegenden Ende des Reibbelagselements (20) angeordnet sind und in einem ersten Nutende zum anderen Umfangsende (36) des wenigstens einen Reibbelagselements (20) offen sind und in einem zweiten Nutende zu einem radial inneren Ende (28) des wenigstens einen Reibbelagselements (20) offen sind, wobei außer an den Nutenden diese Nutabschnitte geschlossen sind und der im Wesentlichen in Umfangsrichtung sich erstreckende Teilerstreckungsbereich des wenigstens einen Nutabschnitts (48, 50) und der im Wesentlichen in radialer Richtung sich erstreckende Teilerstreckungsbereich des wenigstens einen Nutabschnitts (48, 50) in einem Knickbereich oder Krümmungsbereich ineinander übergehen.

2. Reibscheibe nach Anspruch 1, **dadurch gekennzeichnet, dass** die Fluidströmungskanäle (22, 22') zumindest zum Teil zueinander unterschiedliche Kanalbreiten (B, B') aufweisen.

3. Reibscheibe nach einem der Ansprüche 1 oder 2, **dadurch gekennzeichnet, dass** die Nutanordnung (24) wenigstens bereichsweise eine der Dicke des wenigstens einen Reibbelagselements (20) entsprechende Nuttiefe aufweist.

## Claims

1. Friction disc for a wet-running clutch for a vehicle, comprising a lining carrier ring (12) with coupling regions (14) for the coupling of the friction disc (10) to a drive input side or to a drive output side of a clutch, and comprising, on at least one side of the lining carrier ring (12), a multiplicity of friction lining elements (20, 20', 20") supported on said lining carrier ring, wherein fluid flow ducts (22, 22') are provided between friction lining segments (20, 20', 20") which are directly adjacent in a circumferential direction, and wherein at least one of the friction lining segments (20, 20', 20") is formed with a groove arrangement (24) which is open towards a friction surface of said friction lining element, which groove arrangement has at least one groove portion (48, 50) which extends substantially circumferentially in one partial region of extent and which extends substantially radially in a further partial region of extent, and wherein the groove arrangement (24) comprises a first group of groove portions (48) and a second group of groove portions (50), **characterized in that** the groove portions (48) of the first group are open at a first groove end towards one circumferential end (34) of the at least one friction lining element (20) and are open at a second groove end towards a radially outer end (30) of the at least one friction lining element (20), and the groove portions (50) of the second group are arranged at a substantially diametrically oppositely situated end of the friction lining segment (20) and are open at a first groove end towards the other circumferential end (36) of the at least one friction lining element (20) and are open at a second groove end towards a radially inner end (28) of the at least one friction lining element (20), wherein, other than at the groove ends, said groove portions are closed, and wherein the substantially circumferentially extending partial region of extent of the at least one groove portion (48, 50) and the substantially radially extending partial region of extent of the at least one groove portion (48, 50) merge into one another at a kink region or curve region.

2. Friction disc according to Claim 1, **characterized in that** the fluid flow ducts (22, 22') at least partially have duct widths (B, B') which differ from one another.

3. Friction disc according to either of Claims 1 and 2, **characterized in that** the groove arrangement (24) has, at least in regions, a groove depth corresponding to the thickness of the at least one friction lining element (20).

## Revendications

1. Disque de friction pour un embrayage humide pour un véhicule, comportant une bague de support de garniture (12) pourvue de régions d'accouplement (14) pour l'accouplement du disque de friction (10) à un côté d'entraînement ou un côté de sortie d'un embrayage, et comportant d'au moins un côté de la bague de support de garniture (12) une pluralité d'éléments de garniture de friction (20, 20', 20") supportés sur celle-ci, des canaux d'écoulement de fluide (22, 22') étant prévus entre des éléments de garniture de friction (20, 20', 20") immédiatement adjacents dans la direction périphérique, et au moins l'un des éléments de garniture de friction (20, 20', 20") étant réalisé avec un agencement de rainure (24) ouvert en direction d'une surface de friction de cet élément de garniture de friction, lequel agencement de rainure comprend au moins une partie de rainure (48, 50) qui s'étend essentiellement dans la direction périphérique dans une région d'étendue partielle et qui s'étend essentiellement dans la direction radiale dans une autre région d'étendue partielle, et l'agencement de rainure (24) comportant un premier groupe de parties de rainure (48) et un deuxième groupe de parties de rainure (50), **caractérisé en ce que** les parties de rainure (48) du premier groupe sont, à une première extrémité de rainure, ouvertes en direction d'une extrémité périphérique (34) de l'au moins un élément de garniture de friction (20) et, à une deuxième extrémité de rainure, ouvertes en direction d'une extrémité (30) radialement extérieure de l'au moins un élément de garniture de friction (20), et les parties de rainure (50) du deuxième groupe sont disposées à une extrémité essentiellement diamétralement opposée de l'élément de garniture de friction (20) et sont, à une première extrémité de rainure, ouvertes en direction de l'autre extrémité périphérique (36) de l'au moins un élément de garniture de friction (20) et sont, à une deuxième extrémité de rainure, ouvertes en direction d'une extrémité radialement intérieure (28) de l'au moins un élément de garniture de friction (20), ces parties de rainure étant fermées excepté aux extrémités de rainure, et la région d'étendue partielle, s'étendant essentiellement dans la direction périphérique, de l'au moins une partie de rainure (48, 50) ainsi que la région d'étendue partielle, s'étendant essentiellement dans la direction radiale, de l'au moins une partie de rainure (48, 50) se prolongeant l'une dans l'autre dans une région de coude ou une région de courbure.

2. Disque de friction selon la revendication 1, **caractérisé en ce que** les canaux d'écoulement de fluide (22, 22') présentent au moins en partie des largeurs de canal (B, B') différentes les unes des autres.

3. Disque de friction selon l'une quelconque des revendications 1 et 2, **caractérisé en ce que** l'agencement de rainure (24) présente, au moins dans certaines régions, une profondeur de rainure correspondant à l'épaisseur de l'au moins un élément de garniture de friction (20).
